# EUROPEAN PATENT SPECIFICATION

(11) **EP 0 378 408 B1**
(45) Date of publication and mention of the grant of the patent: **10.07.1996**
(21) Application number: 90300309.3
(22) Date of filing: 11.01.1990
(51) Int. Cl.: B01D 3/16

(54) **Double-deck distributor**
Doppelstöckiger Verteiler
Distributeur à deux étages

(30) Priority: 13.01.1989 US 296838
(43) Date of publication of application: 18.07.1990
(73) Proprietor: GLITSCH, INC., Dallas Texas 75212 (US)
(72) Inventor: Chen, Gilbert K., Farmers Branch, Texas 75234 (US); Lee, Adam T., Richardson, Texas 75082 (US); Wu, Kuang-Yeu, Plano, Texas 75075 (US); Gage, Gary W., Grand Prairie, Texas 75051 (US)
(74) Representative: Hitchcock, Esmond Antony

(56) References cited:
- FR-A- 2 319 103
- GB-A- 2 013 510
- US-A- 3 360 246

## Description

The present invention pertains to liquid distributors for vapor-liquid contact towers and, more particularly, to an improved liquid distributor assembly for columns incorporating counter-current, vapor-liquid flow therethrough. One distributor for use in such towers is disclosed in US-A-3,360,246.

It is well known in the prior art to utilize various types of exchange columns in which a gas and a liquid come into contact with one another, preferably in a counter-current flow for purposes of mass or heat transfer, close fractionation and/or separation of feed stock constituents, and other unit operations. Efficient operation requires mass transfer, heat transfer fluid vaporization and/or condensation, whereby one of the fluids can be cooled with a minimum pressure drop through a particular zone or zones of minimum dimensions defining the area and volume thereof. These are pre-requisites for efficient operation and are necessary for close fractionation. For this reason, counter-current flow of vapor and liquid within such exchange columns have become established methods of such vapor-liquid contact in the prior art. The actual vapor-liquid interface requires the utilization of a packing bed positioned within the column. Liquid is then distributed atop the packing bed in the most feasible manner while vapor is distributed beneath the packing bed in the lower region of the tower. In this manner, liquid trickling downwardly through the packing bed is exposed to, and in contact with, the vapor ascending therethrough for vapor-liquid contact and interaction.

It is well established that the configuration of the packing bed determines the pressure drop, the efficiency of the vapor-liquid interface and the concomitant mass and energy transfer occurring in a process tower. The means for effective and even distribution of the vapor and the liquid on opposite ends of the packing bed as well as the means for maintenance of that distribution therethrough are critical to an efficient operation. Only with efficient initial vapor and liquid distribution and with the maintenance of such distribution throughout the packing bed will homogenous mixing zones be created therethrough for maximizing the efficiency therein. Efficiency in a column is directly related to the cost of operation and the production quality. For this reason, a myriad of prior art packing designs have been prevalent in conventional exchange columns. The efficiency of the packing is, however, limited to a large extent by the efficiency of the vapor and liquid distribution thereacross. For example, failure of either vapor or liquid to evenly distribute over cross sections of the packing effectively eliminates the utility or usefulness of that part of the packing where there is poor or no distribution. This phenomena, in turn, directly reduces the efficiency of the tower and decreases the cost effectiveness of the operation. The depths of the packing bed are critical in establishing production criteria and can affect the operational costs. Failure to evenly distribute vapor-liquid and/or maintain homogeneity within the packing bed can lead to serious consequences, particularly in the petroleum refining industry.

Aside from the packing beds themselves, the liquid distributor is the most important unit of a tower internal. Failure in performance of a packed tower sometimes stems from liquid distribution problems such as clogging or uneven distribution. Thus, the selection of a correct liquid distributor is critical for uninterrupted plant operation. Operational considerations thus include the functional aspects of the distributor, such as how level the distributor troughs are maintained, how well the floor is equalized therethrough, and how the liquid is distributed to the troughs so that a substantially uniform liquid level is maintained. The latter point is particularly true in process towers of large diameter where the parting box and distributor troughs are themselves very long and liquid gradients have been established between opposite ends of the troughs.

Conventional liquid distributors generally include the multi-orifice spray head variety adapted for dispersing liquid in the form of a spray atop a packing bed. In the utilization of dump packing wherein a plurality of random oriented packing elements are disposed within the exchange column, such a liquid distribution technique, is sometimes effective. This is true particularly when high efficiency parameters are not of critical significance. However, in the event of high efficiency packing such as that set forth in U.S. Patent No. 4,604,247 assigned to the assignee of the present invention, means for homogeneous liquid and gas distribution are of extreme importance.

The cost of high efficiency packing of the type set forth in the aforesaid patent commands attention to proper vapor-liquid distribution. Even small regions of non-homogenous interaction between the vapor and liquid is an expensive and wasteful loss not consistent with the utilization of high efficiency packing, where space and homogeneity in vapor-liquid interface are both expected and necessary for proper operation. High efficiency packing of the state of the art varieties set forth and shown in the aforesaid U.S. Patent requires counter-current vapor-liquid flow through the channels defined by opposed corrugations of sheets disposed therein. If the initial liquid or gas distribution fails to enter a particular corrugation pattern, then precious surface area is lost in the packing until the liquid and vapor are urged to migrate into and interact through the unfilled regions of the packing. Only by utilizing proper vapor and liquid distribution means may effective and efficient utilization of high efficiency packing, as well as conventional dumped packing, be assured.

The development of systems for adequate liquid distribution in process towers has been limited as set forth above. In the main, it is known to discharge and distribute liquids with spray orifices, supply pipes, perforated plates, apertured troughs and nozzles. Gas is concomitantly discharged in an ascending turbulent configuration to provide adequate vapor distribution. Although many prior art systems are generally effective in distributing some vapor and some liquid to most portions of the packing bed, uniform distribution thereacross is usually not obtained without more sophisticated distribution apparatus. For example, unless gas is injected into a myriad of contiguous areas beneath the packing bed with equal pressure in each area, the mass flow of vapor upwardly through the packing bed will not be uniform. Random vapor discharge simply distributes unequal amounts of vapor across the lower regions of the packing bed but does not in any way assure equality in the distribution. Likewise the simple spray of liquid atop the packing bed, though intended to be effective in wetting all surface areas, often results in high concentrations of liquid flow in certain packing bed areas and less concentrations of liquid flow in others. This unevenness, of course, depends on the spray device. Orifice distributors are generally more susceptible to plugging than other types of distributors, and plugging tends to be non-uniform leading to uneven irrigation within the tower. Surface irregularities in a distributor pan occurring during manufacture will, likewise, increase flow resistance and induce liquid level gradients. With a level gradient, the fluid head between holes varies and the flow of fluid from those holes is not uniform. This is a distinct disadvantage. Any flow irregularity which focuses the flow in one area while reducing flow in other areas is deleterious.

Other structural and functional features of process columns can contribute to flow irregularity. These features include the size and shape of the distributor troughs, steps taken to maintain uniform fluid level in said troughs, and the means by which fluid is distributed to said troughs. The most conventional fluid distribution technique includes the use of a relatively large central channel called a parting box. The parting box is disposed above the distributor troughs and receives the initial flow of fluid from a supply pipe. The fluid enters the parting box and flows therefrom into the distributor troughs. If the parting box is located at one end of a very long distributor trough, as in a large diameter process tower, a fluid gradient can be created simply by virtue of the flow resistance imparted by the side walls of the trough and the discharge of liquid therefrom through the apertures in the trough. The result is reduced liquid flow rates from the ends of the trough and high liquid flow rates from the region of the trough near the parting box. Such liquid gradients resulting in loss of fluid head toward the ends of the parting box can be addressed in part by utilizing secondary parting boxes at intermediate positions between the center diameter of the tower and the ends of the elongate troughs. This does, however, require additional metal in fabrication as well as other structural and functional considerations in the manufacture thereof.

Structured packing can tolerate very little maldistribution, while dump packing can sustain relatively large variations in liquid distribution. Unfortunately, the manifestation of uneven liquid distribution often occurs in the vicinity of the most even, or uniform, vapor distribution. This is because vapor has had a chance to more evenly distribute through the packing bed prior to engaging the liquid distribution flow. It would be an advantage, therefore, to provide means for even liquid and vapor distribution prior to entry of said vapor as well as liquid into the packing bed and in a manner providing both a uniform spread of said liquid as well as vapor and uniform volumetric distribution thereof.

The present invention pertains to liquid distribution systems adapted for uniformly distributing liquid flow through a process tower. More particularly the invention is directed at an improved liquid distributor for process columns of the type having a plurality of distributor troughs adapted to receive liquid flow from a source for establishing a liquid level within the troughs and distributing liquid downwardly to packing beds therebeneath. In use, vapor is injected into the column for ascension therethrough and liquid is dispersed in the column for downward flow over the packing beds in the tower for facilitating the interaction of vapor and liquid passing in counter-current flow therethrough. The distributor is adapted for positioning above a packing section for the even distribution of liquid downwardly therethrough. According to the invention the distributor comprises a parting box traversing the distributor and disposed over the distributor troughs; and a primary flow channel secured within at least one trough but above a said liquid level therein, for disseminating fluid laterally relative to the parting box along the respective trough, the parting box being adapted to deliver liquid simultaneously to the troughs and the primary flow channels therein such that fluid is disseminated both within the flow channels and below the flow channels in the troughs. Stilling plates may be secured to and depending from the primary flow channels into the respective troughs to still the flow of liquid therein.

In preferred embodiments of the invention, each distributor trough extends laterally only on one side of the parting box, the troughs being arranged in pairs extending on opposite sides of the parting box, and precluding flow of liquid within a trough from one side of the parting box to the other side thereof.

Another preferred option is the construction of the primary flow channels with a plurality of apertures for facilitating the even distribution of liquid flow into the respective distributor trough. With this arrangement, the primary flow channel may be constructed of a length substantially equivalent to the length of the respective distributor trough.

In an alternative to the above option, the primary flow channel is of a length substantially one-half the length of the respective distributor trough for discharging flow therefrom along the mid span of the trough. This may provide for discharging flow therefrom at an imparted velocity into regions such as the mid span of the trough. The channel may be positioned in axial alignment or in an angular relationship relative to the trough for discharging fluid therein at an imparted velocity.

A liquid distributor of the invention incorporates primary distributor channels disposed within the parting box and/or certain distributor troughs. Primary liquid distribution may therein be provided in the parting box and/or troughs through decked or "piggy-back" channels which carry the primary liquid flow to thereby reduce both the potential fluid gradient and the variable liquid head that would ordinarily plague such systems. In this manner, the advantages of uniform flow distribution may be provided in an assembly facilitating a low profile configuration, minimum material costs and reduced labor costs such as welding, within the tower.

The invention will now be described by way of example and with reference to the accompanying drawings wherein:
FIG. 1 is a perspective view of a packed column with various sections cut away for illustrating a variety of tower internals and one embodiment of a liquid flow distributor trough constructed in accordance with the principles of the present invention disposed therein;
FIG. 2 is an enlarged, top plan view of the process tower of FIG. 1 taken along lines 2-2 thereof and showing one embodiment of a distributor trough array and parting box assembly constructed in accordance with the principles of the present invention;
FIG. 3 is an enlarged, end elevational, cross-sectional view of the liquid flow distributor trough array of FIG. 2 taken along lines 3-3 thereof;
FIG. 4 is an enlarged, side elevational, cross-sectional view of the liquid flow distributor trough array of FIG. 2 taken along lines 4-4 thereof;
FIG. 5 is an enlarged, side elevational, cross-sectional view of an alternative embodiment of the trough of FIG. 4;
FIG. 6 is an enlarged, end elevational, cross-sectional view of the liquid flow distributor trough of FIG. 5 taken along lines 6-6 thereof;
FIG. 7 is an enlarged, end elevational, cross sectional view of yet another alternative embodiment of a liquid distributor trough constructed in accordance with the principles of the present invention; and
FIG. 8 is an enlarged, end elevational, cross-sectional view of a further alternative embodiment of a liquid distributor trough or parting box constructed in accordance with the principles of the present invention.

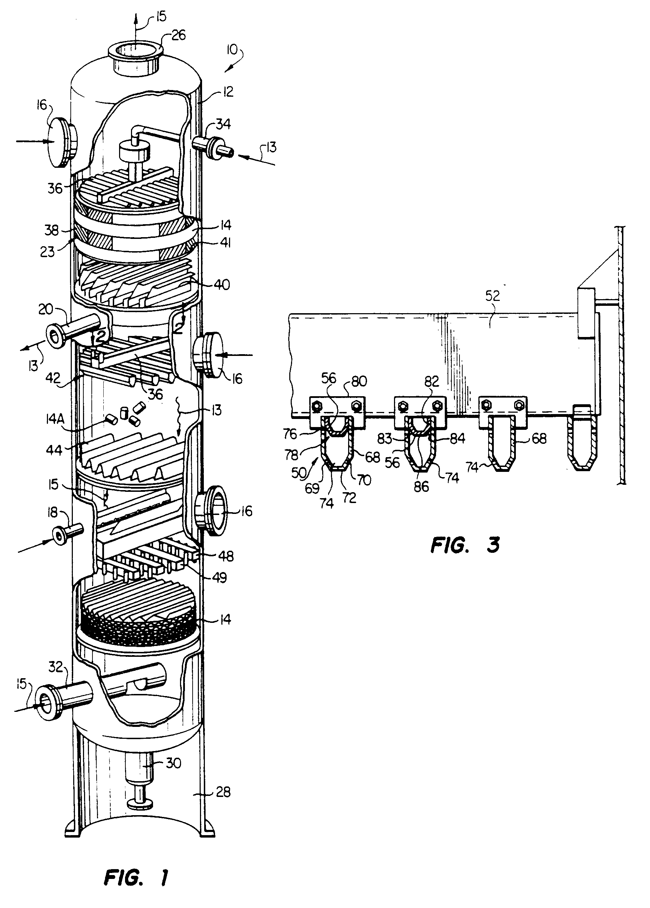

Referring first to FIG. 1, there is shown a perspective view of a packed exchange tower or column with various sections cut away for illustrating a variety of internals and the utilization of one embodiment of the liquid distributor of the present invention. The exchange column 10 of FIG. 1 comprises a cylindrical tower 12 having a plurality of packing bed layers 14 disposed therein. A plurality of manways 16 are likewise constructed for facilitating access to the internal region of the tower 12 for replacement of the packing beds 14. Also provided are side stream draw off line 20, liquid side feed line 18, and side stream vapor feed line or reboiler return line 32. A reflux return line 34 is provided atop the tower 10.

In operation, liquid 13 is fed into the tower 10 through reflux return line 34 and side stream feed input feed line 18. The liquid 13 flows downwardly through the tower and ultimately leaves the tower either at side stream draw off 20, or at bottom stream draw off line 30. In its downward flow, the liquid 13 is depleted of some material which evaporates from it as it passes through the packing beds, and is enriched or added to by material which condenses into it out of the vapor stream.

Still referring to FIG. 1, the exchange column 10 further includes a vapor outlet, overhead line 26 disposed atop the tower 12 and a lower skirt 28 disposed in the lower region of the tower around bottom stream takeoff line 30 coupled to a reboiler (not shown). Reboiler return conduit 32 is shown disposed above the skirt 28 for recycling vapor therein upwardly through the packing layers 14. Reflux from condensers is provided in the upper tower region 23 through entry conduit 34 wherein reflux is distributed throughout a liquid distributor 36 across upper packing bed 38. It may be seen that the upper packing bed 38 is of the structured packing variety. The regions of the exchange column 10 beneath the upper packing bed 38 are shown for the purpose of illustration and include a liquid collector 40 disposed beneath a support grid 41 in support of the upper structured packing 38. A liquid distributor 42, adapted for redistributing liquid 13, is likewise disposed there-beneath and an intermediate support plate 44 is provided in an alternative configuration of the type adapted for supporting random packing 14A of either a ring or a saddle variety as representatively shown. Another liquid distributor 48 is disposed beneath plate 44 and comprises a plurality of troughs 49. The distributor 48 is constructed in an alternative embodiment utilizing a tube assembly set forth and described in detail in U.S. Patent Application Serial No. 266,886, assigned to the assignee of the present invention. It may be seen from this figure that the counter-current configuration between the ascending vapor 15 and the descending liquid 13 is the subject of a plurality of critical design considerations including liquid/vapor ratios, liquid cooling, foaming and the presence of solids or slurries therein. Corrosion is likewise a consideration of the various elements in the packed towers and the selection of the material in the fabrication of the tower internals is in many instances the results of such considerations. The anatomy of the packed column as shown in FIG. 1 is likewise described in more detail in an article by Gilbert Chen entitled "Packed Column Internals" appearing in the March 5, 1984 edition of Chemical Engineering.

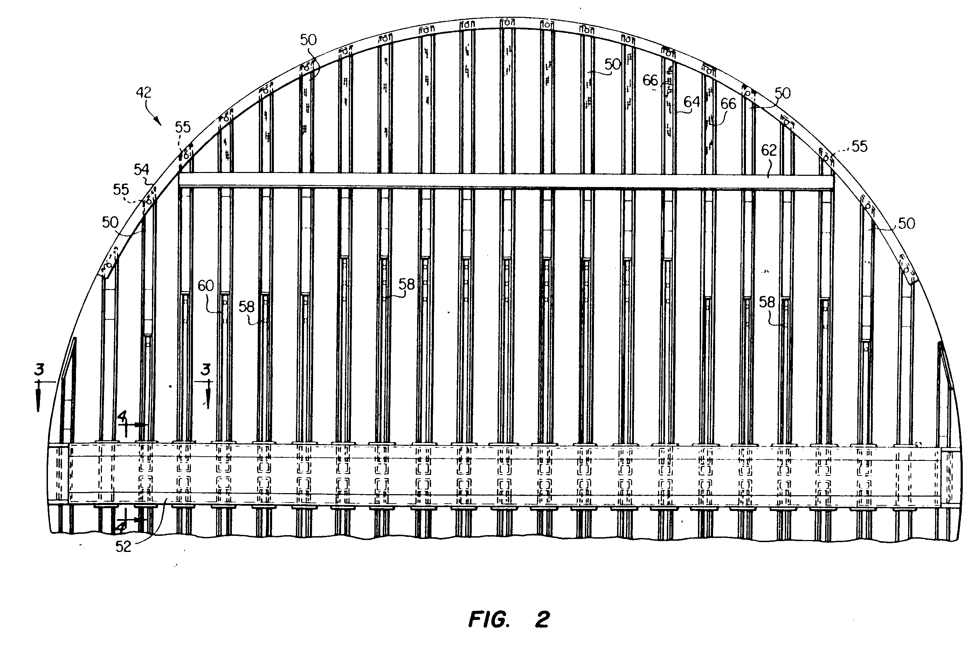

Referring now to FIG. 2, there is shown an enlarged, top plan view of a parting box distribution assembly and distributor trough array (referred to collectively as the distributor 42) constructed in accordance with the principles of the present invention. The distributor 42 is comprised of a plurality of distributor troughs 50 spaced one from the other in generally parallel spaced relationship. Each distributor trough 50 is disposed in flow communication with and orthogonal to, a parting box 52. Parting box 52 is secured in the central portion of the tower 12, across the diameter thereof, and each distributor trough 50 has one end disposed therebeneath to receive the fluid flow. Each distributor trough 50 extending from beneath the parting box 52 terminates adjacent to the cylindrical round wall 54 of the tower 12. Most troughs 50 have angular end sections 55 to accommodate the curvature of wall 54. The angular relationship of each section 55 relative to each trough 50 varies depending on its position in the tower as shown in FIG. 2. Also shown in FIG. 2 is the positioning of an upper, "piggy-back" trough 56 serving the function of a primary flow channel extending away from the parting box 52. Each flow channel 56 is constructed with a plurality of apertures 58 and positioned in the respective trough 50 for providing even fluid flow therein, as described in more detail below. In this manner, an improved liquid flow distribution can be achieved in a process column.

Still referring to FIG. 2, each trough 50 is secured within the tower 12 by a series of structural elements. A first structural beam 62 is shown affixed to each trough 50 in securement thereto. Likewise, each trough 50 is secured to the parting box 52 as shown in more detail below. It may be seen that the region 64 of each trough 50 extending beyond the upper flow channel 56 is covered by a wire mesh 66. The length of the wire mesh 66 for each trough 50 varies depending upon its position in the tower 12.

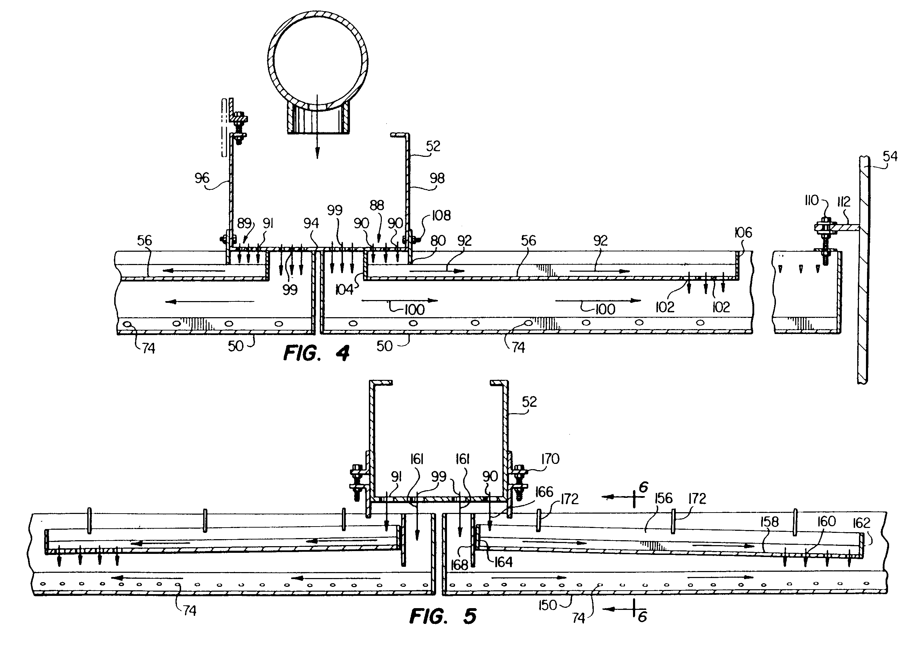

Referring now to FIG. 3, there is shown an enlarged, end elevational view of several of the troughs 50 of FIG. 2 taken along lines 3-3 thereof. Each trough 50 of this particular embodiment includes vertical side walls 68 terminating in angulated side walls 69 and 70. A bottom 72 is formed thereacross above which apertures 74 are formed in the side walls 69 and 70. Emergency overflow apertures 76 are formed in a V-shaped configuration in the vertical side walls 68 of the trough 50. In the uppermost region 78 of the trough 50, the upper trough, or primary flow channels 56 are secured. In this particular configuration, the upper flow channels 56 are positioned within, and secured directly to, the trough 50. A mounting plate 80 is secured therebehind providing means for direct securement to the parting box 52.

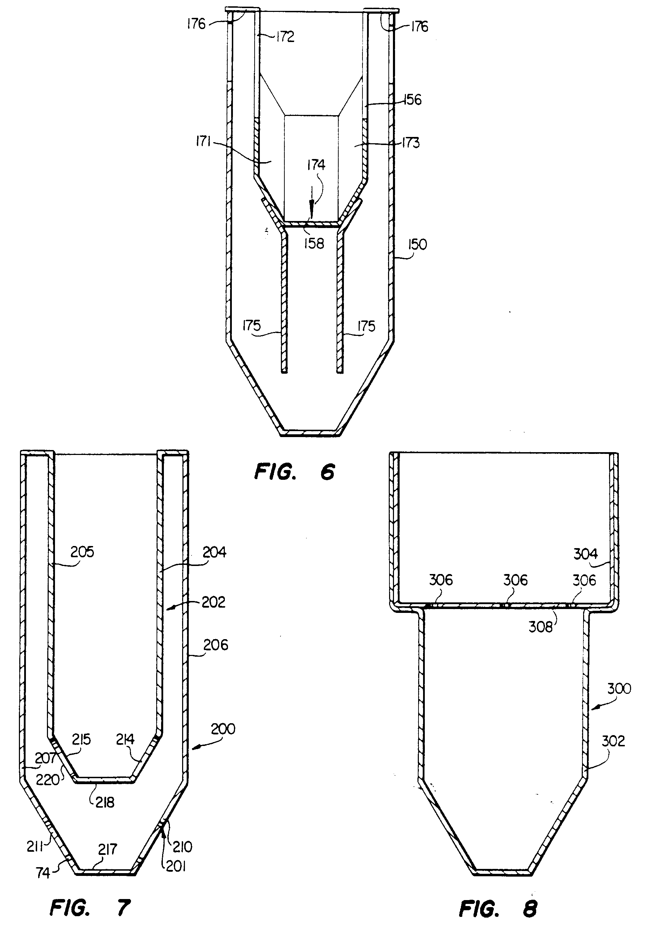

Still referring to FIG. 3, the upper trough 56 includes generally parallel side walls 82 terminating in angulated side walls 83 and 84 which themselves terminate in the bottom 86. A plurality of apertures are formed in the bottom region 86 as described in more detail below. It is through the apertures 86 that fluid flowing from the parting box 52 into the primary flow channel, or channels, 56 is distributed downwardly and uniformly into the trough 50 thereby permitting a generally uniform flow therein at a liquid level having a generally uniform head for even distribution and fluid flow from apertures 74. Obviously, other mounting configurations as well as designs for upper channel 56 are possible. These include the stilling plates shown in FIG. 6 and several others shown in more detail below.

Referring now to FIG. 4, there is shown an enlarged side elevational cross-sectional view of the trough 50 and parting box 52 of FIG. 2. The primary flow channel, or upper trough, 56 is shown secured within trough 50 in a position contiguous to outer portion 88 of parting box 52. In outer portion 88, a plurality of apertures 90 are formed to allow flow directly from the parting box 52 into the primary flow channel 56. Arrows 92 illustrate this flow configuration. Parting box 52 may thus be seen to be constructed with a bottom section 94 formed between side wall sections 96 and 98. Within the bottom section 94 the apertures 90 are formed in outer parting box regions 88 and 89. On the left side of parting box, apertures 91 are formed in the region 89 for a fluid flow communication with the primary flow channel 56 disposed therebeneath. Internally to the outwardly disposed apertures 90 and 91 are inwardly disposed apertures 99 which provide a direct flow communication for the parting box 52 to the troughs 50. It is in this manner that many troughs of the prior art were directly fed with liquid for counter-current flow distribution. In the present embodiment, the primary flow channel 56 is disposed beneath the bottom surface 94 of the parting box 52 and outer regions 88 and 89 thereof to thereby be positioned in a flow communication with apertures 90 and 91 while receiving a primary fluid flow therein. In this manner, flow can be directly communicated to select regions including intermediate portions of the respective troughs 50.

Still referring to FIG. 4, there is shown a select flow pattern of fluid from parting box 52 into troughs 50 represented by arrows 100. It is this flow which permits direct fluid feed to the parting box 50 for the regions of the trough 50 immediately adjacent thereto. The secondary feed from primary flow channel 56 is provided through apertures 102 formed in select regions thereof and particularly in the distal end of primary flow channel 56 as shown in FIG. 4. Each end of the primary flow channel 56 of this particular embodiment is constructed with end caps 104 and 106. End cap 104 is disposed immediately beneath the parting box 52 with end cap 106 disposed at the opposite end thereof. In this manner, all liquid flow from the primary flow trough 50 occurs through the apertures 102. It should be noted that the size, quantity and location of the apertures 102 are not limited to that shown herein. Any aperture configuration is possible, including the absence of apertures and the removal of end plate 106. Moreover, more than one primary flow channel 56 may be utilized in a single trough 50 for providing primary flow distribution at multiple locations therewithin.

Still referring to FIG. 4, it may be seen that securement of the distributor troughs 50 is facilitated by connections at opposite ends thereof. Adjacent to the parting box 52, securement flange 80 is secured by a bolt assembly 108. At the opposite end of trough 50, a second bolt assembly 110 is utilized for securement of the trough 50 to a tray support ring 112 which is itself secured to the tower shell 54. In this manner, the fluid level within the respective troughs 50 may be selectively maintained in accordance with the principles of flow therein established by utilizing both the primary flow channel 56 and the direct feed of the trough 50 from the parting box 52. As stated above, a myriad of flow distribution configurations are possible with the present invention including the absence of direct flow from the parting box 52 into the trough 50 through apertures 99.

The purpose of the present invention is to facilitate the uniform distribution of liquid in and from the trough 50 to apertures formed therein. By maintaining the uniform liquid level through the utilization of the primary flow channel, or upper trough, 56 that will carry fluid to locations remote in the trough 50 relative to the parting box 52, primary flow channel 56 thus functions as an extension of said parting box.

Referring now to FIG. 5, there is shown yet an alternative embodiment of the primary flow channel distributor, or upper trough, 56 of FIG. 4. Parting box 52 of FIG. 5 is disposed above troughs 150 having a primary flow channel 156 assembled therein. Primary flow channel 156 is constructed with a bottom surface 158 having apertures 160 formed in the end thereof. First end plate 162 is secured adjacent to the apertures 160 with a second end plate 164 secured adjacent to parting box 52. Apertures 90 thus provide direct fluid flow as represented by arrows 166 into primary flow channel 156. Arrows 161 represent flow through apertures 99 of fluid directly into trough 150. A baffle 168 is shown adjacent to arrow 161 for preventing the spray of fluid into primary flow channel 156. The mounting of this particular assembly is modified as shown herein by utilizing a bracket assembly 170 providing adjustability in the vertical positioning of the trough 150 relative to the parting box 52. A plurality of support members 172 are included in direct assembly with trough 156 for securement to trough 150. This provides the requisite stability for fluid flow therethrough. It may be seen that this particular fluid flow configuration will afford the direct flow of fluid through apertures 90 at a greater rate than that provided in the configuration shown in FIG. 4. As stated above, a wide variety of angular configurations is contemplated relative to the bottom surface 158 of primary flow channel 156. Angular variations will have a similar impact upon the amount of fluid flow distributed therewith and such angular variation may be sized relative to the size of aperture 90 and the size of parting box 52.

Referring now to FIG. 6, there is shown an enlarged end elevational view of the distributor trough 150 of FIG. 5 and the primary flow channel 156 constructed therein. The primary flow channel 156 includes angulated side walls 171 and 173 terminating in bottom 158. The slope of bottom surface 158 illustrated by the arrow 174 affords the increased fluid velocity and distribution from the parting box 52 in accordance with the principles of the present invention. Side walls 172 comprise vertical sections which are connected to trough 150 by mounting members 176. Also shown in this view are stilling plates 175 which depend from the channel 176 to still fluid distributed in trough 150. These plates reduce splashing of the liquid and promote uniform liquid flow. Plates 175 may also be incorporated into the other channel constructions shown herein.

Referring now to FIG. 7, there is shown an alternative embodiment of the construction of a primary flow channel and distributor trough assembly. Trough assembly 200 is thus comprised of a primary flow channel 202 directly mounted therein. Primary flow channel 202 is constructed with side walls 204 and 205 which are in generally parallel spaced relationship with side walls 206 and 207 of distributor trough 200. Likewise, the angulated side wall regions 210 and 211 of distributor trough 200 are disposed in generally parallel relationship with side wall regions 214 and 215 of primary flow channel 202. A bottom wall 217 in distributor trough 200 is disposed in generally parallel spaced relationship with a bottom surface 218 of primary flow channel 202. Apertures 220 are selectively spaced in the angulated side walls 214 and 215 of primary flow channel 202 to thereby distribute flow therefrom into distributor trough 200. The hole pattern of distributor trough 200 may be in accordance with any particular applications and may include not only a baffled distributor configuration such as that set forth and shown in U.S. Patent No. 4,729,857, dated March 8, 1988, and assigned to the assignee of the present invention.

FIG. 8 illustrates yet another embodiment of a flow distribution assembly 300 constructed in accordance with the principles of the present invention. Assembly 300 includes a lower trough 302 contiguous to, and depending from, an upper trough 304. Upper trough 304 is constructed with a plurality of apertures 306 in a bottom wall 308 thereof for permitting the select flow of fluid therefrom. This particular configuration illustrates yet another embodiment of an upper and lower flow channel in a liquid distribution network. The channels herein represented by section 302 and section 304 may be assembled in a variety of angular relationships and interengagements. Flow from the upper channel to the lower channel may be provided by either apertures, vents, orifices, end caps or the absences thereof and/or combinations thereamong. Likewise, the cross sectional configuration of the respective troughs and/or channels may vary depending on the particular application and fluid flow requirements. These applications may include the utilization of the primary flow channel aspect not only in distributor troughs but also in the parting boxes of the type set forth and described above. In utilizing a parting box, the aspect of fluid flow may be incorporated to maintain uniformity and fluid equilibrium between sections and parting box in a tower of relatively large diameter. The principles of the present invention may thus be seen to be applicable to any distribution system for liquid in a process tower suffering from the potential problem of non-uniform liquid levels due to the length of travel of fluid flow for distribution.

It is thus believed that the operation and construction of the present invention will be apparent from the foregoing description.

## Claims

1. A liquid distributor assembly for a process column of the type having a plurality of distributor troughs (50) adapted to receive liquid flow from a source for establishing a liquid level within the troughs and distributing liquid downwardly to packing beds (14) therebeneath, which distributor comprises:
a parting box (52) traversing the distributor and disposed over the distributor troughs (50, 150); and a primary flow channel (56, 156) secured within at least one trough (50, 150) but above a said liquid level therein, for disseminating fluid laterally relative to the parting box (52) along the respective trough, the parting box (52) being adapted to deliver liquid simultaneously to the troughs (50, 150) and the primary flow channels (56, 156) therein such that fluid is disseminated both within the flow channels (56, 156) and below the flow channels (56, 156) in the troughs (50, 150).

2. A distributor assembly according to Claim 1 wherein each distributor trough (50) extends laterally only on one side of the parting box (52), the troughs being arranged in pairs extending on opposite sides of the parting box (52), and precluding flow of liquid within a trough (50, 150) from one side of the parting box to the other side thereof.

3. A distributor assembly according to Claim 1 or Claim 2 including stilling plates (175) secured to and depending from the primary flow channels (56, 156) into the respective troughs (50, 150) to still the flow of liquid therein.

4. A distributor assembly according to any preceding Claim wherein the primary flow channel (56, 156) is constructed with a plurality of apertures for facilitating the even distribution of liquid flow into the respective distributor trough (50, 150).

5. A distributor assembly according to Claim 4 wherein the primary flow channel (56, 156) is constructed of a length substantially equivalent to the length of the respective distributor trough (50, 150).

6. A distributor assembly according to any of Claims 1 to 4 wherein the primary flow channel (56, 156) is of a length substantially one-half the length of the respective distributor trough (50, 150) for discharging flow therefrom along the mid span of the trough.

7. A distributor assembly according to any preceding Claim wherein the primary flow channel (56, 156) is disposed within the distributor trough (50, 150) in an angular relationship thereto for discharging fluid therein at an imparted velocity.

8. A process column comprising a plurality of packing beds with liquid distributor assemblies according to any preceding Claim disposed thereover.

## Patentansprüche

1. Flüssigkeitsverteilersystem für eine Prozeßsäule des Typs, der mehrere Verteilerrinnen (50) aufweist, die geeignet sind, einen Flüssigkeitsstrom aus einer Quelle aufzunehmen, um einen Flüssigkeitsfüllstand in den Rinnen einzustellen und Flüssigkeit nach unten auf darunterliegende Füllkörperschüttungen (14) zu verteilen, wobei der Verteiler enthält:
einen Trennkasten (52), der den Verteiler durchmißt und über den Verteilerrinnen (50, 150) angeordnet ist, und einen primären Fließkanal (56, 156), der in zumindest einer Rinne (50, 150), aber oberhalb des Flüssigkeitsfüllstands in dieser angeordnet ist, um Fluid seitlich in bezug auf den Trennkasten (52) entlang der jeweiligen Rinne zu verteilen, wobei der Trennkasten (52) geeignet ist, die Flüssigkeit gleichzeitig in die Rinnen (50, 150) und die primären Fließkanäle (56, 156) in diesen zu übertragen, derart daß das Fluid sowohl in den Fließkanälen (56, 156) als auch unter den Fließkanälen (56, 156) in den Rinnen (50, 150) verteilt wird.

2. Verteilersystem nach Anspruch 1, in dem sich jede Verteilerrinne (50) seitlich nur auf einer Seite des Trennkastens (52) erstreckt, wobei die Rinnen paarweise angeordnet sind, sich auf entgegengesetzten Seiten des Trennkastens (52) erstrecken und einen Flüssigkeitsfluß in einer Rinne (50, 150) von einer Seite des Trennkastens auf die andere Seite verhindern.

3. Verteilersystem nach Anspruch 1 oder Anspruch 2, das Dämpfungsplatten (175) aufweist, die an den primären Fließkanälen (56, 156) befestigt sind und nach unten in die jeweiligen Rinnen (50, 150) hängen, um den Flüssigkeitsstrom darin zu beruhigen.

4. Verteilersystem nach einem der vorhergehenden Ansprüche, in dem der primäre Fließkanal (56, 156) mit mehreren Öffnungen ausgestaltet ist, um die gleichmäßige Verteilung des Flüssigkeitsstroms in die jeweiligen Verteilerrinnen (50, 150) zu erleichtern.

5. Verteilersystem nach Anspruch 4, in dem der primäre Fließkanal (56, 156) in einer Länge hergestellt ist, die im wesentlichen der Länge der jeweiligen Verteilerrinne (50, 150) entspricht.

6. Verteilersystem nach einem der vorhergehenden Ansprüche 1 bis 4, in dem der primäre Fließkanal (56, 156) eine Länge hat, die im wesentlichen der halben Länge der jeweiligen Verteilerrinne (50, 150) entspricht, um einen Fluß aus jenem entlang der mittleren Spanne der Rinne abzulassen.

7. Verteilersystem nach einem der vorhergehenden Ansprüche, in dem der primäre Fließkanal (56, 156) in der Verteilerrinne (50, 150) in einer ringförmigen Anordnung in bezug auf diese angeordnet ist, um das sich darin befindende Fluid mit einer ihm dadurch verliehenen Geschwindigkeit abzulassen.

8. Prozeßsäule, die mehrere Füllkörperschüttungen enthalt, über denen Flüssigkeitsverteilersysteme gemäß einem der vorhergehenden Ansprüche angeordnet sind.

## Revendications

1. Ensemble distributeur de liquide pour une colonne de traitement du type comportant plusieurs gouttières de distributeur (50) adaptées pour recevoir un écoulement de liquide venant d'une source afin d'établir un niveau de liquide dans les gouttières et de distribuer le liquide vers le bas, sur des lits de garnissage (14) se trouvant au-dessous, le distributeur comprenant :
un compartiment (52) traversant le distributeur et disposé au-dessus des gouttières de distributeur (50; 150); et un canal d'écoulement principal (56, 156) fixé à l'intérieur d'au moins une gouttière (50, 150), mais au-dessus du niveau de liquide dans celle-ci, afin de disséminer du fluide latéralement par rapport au compartiment (52), le long de la gouttière respective, le compartiment (52) étant adapté pour délivrer du liquide simultanément aux gouttières (50, 150) et aux canaux d'écoulement principaux (56, 156) situés dans celles-ci, de manière que ce fluide soit disséminé à la fois dans les canaux d'écoulement (56, 156) et au-dessous des canaux d'écoulement (56, 156) dans les gouttières (50, 150).

2. Ensemble distributeur selon la revendication 1, dans lequel chaque gouttière de distributeur (50) s'étend latéralement d'un côté seulement du compartiment (52), les gouttières étant disposées par paires s'étendant de part et d'autre du compartiment (52) et empêchant l'écoulement d'un liquide situé à l'intérieur d'une gouttière (50, 150), d'un côté à l'autre du compartiment.

3. Ensemble distributeur selon la revendication 1 ou la revendication 2, comprenant des plaques de tranquillisation (175) fixées aux canaux d'écoulement principaux (56, 156) situés dans les gouttières (50, 150) respectives et pendant à partir de ces canaux, afin de tranquilliser l'écoulement du liquide dans les gouttières.

4. Ensemble distributeur selon l'une quelconque des revendications précédentes, dans lequel le canal d'écoulement principal (56, 156) est conçu pour avoir plusieurs ouvertures destinées à faciliter la distribution régulière d'un écoulement de liquide dans la gouttière de distributeur (50, 150) correspondante.

5. Ensemble distributeur selon la revendication 4, dans lequel le canal d'écoulement principal (56, 156) est conçu pour avoir une longueur sensiblement équivalente à la longueur de la gouttière de distributeur (50, 150) correspondante.

6. Ensemble distributeur selon l'une quelconque des revendications 1 à 4, dans lequel le canal d'écoulement principal (56, 156) a une longueur représentant sensiblement la moitié de la longueur de la gouttière de distributeur (50, 150) correspondante, afin de décharger un écoulement le long de la partie médiane de la gouttière.

7. Ensemble distributeur selon l'une quelconque des revendications précédentes, dans lequel le canal d'écoulement principal (56, 156) est disposé à l'intérieur de la gouttière de distributeur (50, 150), selon une certaine relation angulaire par rapport à celle-ci, afin d'y décharger du fluide à une vitesse impartie.

8. Colonne de traitement comprenant plusieurs lits de garnissage comportant des ensembles distributeurs de liquide selon l'une quelconque des revendications précédentes, situés au-dessus d'eux.
